# EUROPÄISCHE PATENTSCHRIFT

(11) **EP 1 198 887 B1**
(45) Veröffentlichungstag und Bekanntmachung des Hinweises auf die Patenterteilung: **10.09.2008**
(21) Anmeldenummer: 00951414.2
(22) Anmeldetag: 20.07.2000
(51) Int. Cl.: H03K 17/96

(54) **BEDIENUNGSVORRICHTUNG MIT LICHTDETEKTOR**
OPERATING DEVICE HAVING A LIGHT DETECTOR
DISPOSITIF D'ACTIONNEMENT A PHOTODETECTEUR

(30) Priorität: 21.07.1999 DE 19934186
(43) Veröffentlichungstag der Anmeldung: 24.04.2002
(73) Patentinhaber: Wacker Construction Equipment AG, 80809 München (DE)
(72) Erfinder: STEFFEN, Michael, D-82131 Stockdorf (DE)
(74) Vertreter: Hoffmann, Jörg Peter
(86) Internationale Anmeldenummer: PCT/EP2000/006959
(87) Internationale Veröffentlichungsnummer: WO 2001/008310

(56) Entgegenhaltungen:
- FR-A- 2 674 077
- US-A- 5 319 250
- US-A- 5 367 158

## Beschreibung

Die Erfindung betrifft eine Bodenverdichtungsvorrichtung.

Zum Bedienen bzw. Steuern von Arbeitsmaschinen kommen Führungsbügel. Steuerhebel. Sicherheitsbügel. Schalter. Taster usw. in vielfältiger Form zum Einsatz. Den meisten dieser Bedienelemente gemeinsam ist. daß der Bediener mit seiner Hand durch Krafteinleitung auf ein Steuersystem eine gewünschte Aktion auslöst. Gegebenenfalls werden dazu noch vom Bediener zu betätigende Sicherheitselemente wie Druckbügel o. ä. vorgesehen, um sicherzustellen, daß der Bediener die Arbeitsmaschine festhält und somit eine Gefährdung durch die Arbeitsmaschine bei Fehlfunktion oder Fehlbedienung auszuschließen. Darüber hinaus sind auch taktile, kapazitive. Ultraschall- und Infrarot-Sensoren bekannt, die das Vorhandensein bzw. Annähern der Hand an das Bedienelement feststellen.

Die verschiedenen Bedienungsvorrichtungen dieser Art weisen unterschiedliche Nachteile auf: Bei Sicherheitsbügeln. Schaltern oder Tastern ist ein Halten eines beweglichen Stellgliedes durch die Hand erforderlich, was auf Dauer zur Ermüdung der Hand führt. Weiterhin kann durch das meist erforderliche feste Zugreifen der Hand ein Einleiten von Vibrationen in Hand und Arm des Bedieners begünstigt werden. Die Sensoren sind teilweise störempfindlich oder bei Handschuh-Bedienung unbrauchbar.

In FR-A-2 674 077 ist beispielsweise ein optischer Schalter als Bedienvorrichtung beschrieben, der sich an wechselnde Umgebungslichtverhältnisse anpassen kann.

In US-A-5,319.250 ist ein Führungsbügel eines Geräts offenbart, das mit beiden Händen des Bedieners an dem Bügel gesteuert wird, um das Vorhandensein der Hände an dem Bügel sicherzustellen.

Der Erfindung liegt die Aufgabe zugrunde, eine Bodenverdichtungsvorrichtung anzugeben, mit der das Vorhandensein einer Hand an einem Bedienteil. insbesondere einem Führungsbügel, auch bei starken Erschütterungen, zuverlässig festgestellt werden kann, ohne daß-von der Hand nennenswerte Kräfte aufgewendet werden müssen.

Die Aufgabe wird erfindungsgemäß durch eine Bodenverdichtungsvorrichtung mit den Merkmalen von Patentanspruch 1 gelöst. Vorteilhafte Weiterentwicklungen der Erfindung sind den abhängigen Ansprüchen zu entnehmen.

Eine erfindungsgemäße Bodenverdichtungsvorrichtung weist einen Führungsbügel auf, in dem wenigstens ein im Griffbereich der Hand vorgesehener und ein der Helligkeit entsprechendes Signal (Helligkeitssignal) abgebender Lichtdetektor vorgesehen ist, wobei der Lichtdetektor mit einer Auswerteschaltung gekoppelt ist, in der das Helligkeitssignal derart auswertbar ist, dass bei Unter- oder Überschreiten einer vorgegebenen Helligkeitsschwelle ein Steuersignal an eine Steuereinrichtung des Geräts abgegeben wird, und die Helligkeitsschwelle von der Auswerteschaltung in Abhängigkeit von Umgebungsbedingungen variabel einstellbar ist, wobei zum Bestimmen der Umgebungsbedingungen ein mit der Auswerteschaltung gekoppelter Umgebungslichtdetektor außerhalb des Griffbereiches der Hand vorgesehen ist.

Eine derartige Bodenverdichtungsvorrichtung ermöglicht es, daß nur durch Annähern der Hand des Bedieners an das Bedienteil (Führungsbügel) die auf den Lichtdetektor einfallende Lichtmenge verändert wird, was von diesem erkannt und an die Auswerteschaltung gemeldet wird. Wenn der Bediener das Bedienteil mit der Hand übergreift, wird der Lichtdetektor abgedunkelt und weitgehend von der durch die Sonne oder eine künstliche Arbeitsbeleuchtung gegebene Außenhelligkeit getrennt. Durch das Abdunkeln des Lichtdetektors und die dadurch hervorgerufene Änderung des Helligkeitssignals kann zuverlässig bestimmt werden, daß sich eine Hand dem Bedienteil angenähert hat.

Der Lichtdetektor arbeitet vorzugsweise nach photoelektrischem oder photoresistivem Prinzip, so daß das Helligkeitssignal bei Lichteinfall seine Stärke ändert.

Dem Lichtdetektor ist dabei vorteilhafterweise kein Licht abgebendes Element, also keine zusätzliche Lichtquelle, an dem Bedienteil zugeordnet, was die Störungsunempfindlichkeit erheblich begünstigt.

Wie bereits erwähnt. ist die Helligkeitsschwelle von der Auswerteschaltung in Abhängigkeit von Umgebungbedingungen variabel einstellbar. Zu diesem Zweck ist die Auswerteschaltung mit einem'zusätzlichen Umgebungslichtdetektor gekoppelt, der die Umgebungshelligkeit absolut erfaßt. Wenn dann die vom Lichtdetektor am Bedienteil bestimmte Helligkeit eine in Abhängigkeit von dem absoluten Helligkeitswert bestimmte Helligkeitsschwelle unterschreitet, kann dies von der Auswerteschaltung als Annäherung einer Hand an das Bedienteil interpretiert werden. Dadurch werden Einflüsse durch die Umgebungshelligkeit ausgeschlossen, da diese stark variieren kann (Dämmerlicht, direkter Sonneneinfall).

Bei einer besonders vorteilhaften Ausführungsform der Erfindung sind an dem Bedienteil mehrere Lichtdetektoren an wenigstens zwei im Griffbereich beider Hände liegenden Stellen vorgesehen. Dadurch ist die mit den Lichtdetektoren gekoppelte Auswerteschaltung in der Lage festzustellen, daß beide Hände am Bedienteil anliegen, was aus Sicherheitsgründen bei bestimmten Arbeitsmaschinen Vorschrift ist.

Die Bodenverdichtungsvorrichtung ist beispielsweise ein Stampfer, eine Vibrationsplatte oder eine Vibrationswalze. Bodenverdichtungsvorrichtungen werden im rauhen Baustellenbetrieb starken Beanspruchungen ausgesetzt, wodurch zahlreiche bekannte Bedienungsvorrichtungen schnell versagen oder erheblichen konstruktiven Aufwand erfordern. Die erfindungsgemäß vorgeschlagenen Lichtdetektoren lassen sich jedoch gut von der Umgebung abkoppeln und vor Verschmutzung oder Zerstörung schützen, wenn sie in das Bedienteil integriert werden.

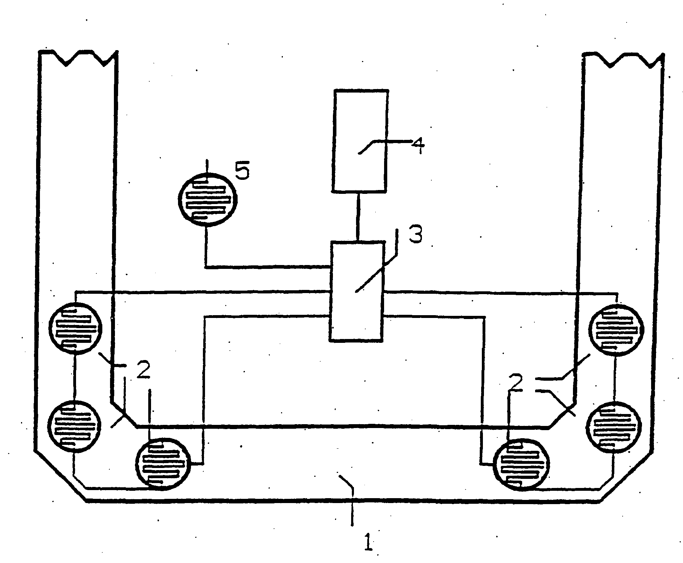

Diese und weitere Vorteile und Merkmale der Erfindung werden nachfolgend anhand eines Beispiels unter Zuhilfenahme der Figur näher erläutert.

Die einzige Figur zeigt schematisch in Draufsicht auf einen als Bedienteil dienenden Führungsbügel 1. der an nicht gezeigter Stelle mit einer als zu bedienendes Gerät dienenden Bodenverdichtungsvorrichtung gekoppelt ist.

An dem Führungsbügel. 1 sind mehrere Lichtdetektoren 2 an Stellen angebracht, an denen der Bediener üblicherweise den Führungsbügel 1 mit beiden Händen hält. Als Lichtdetektoren 2 eignen sich lichtempfindliche Elemente, wie Photodioden. Phototransistoren, lichtempfindliche Widerstände (LDR, Light-Dependent-Resistor) und ähnliche, durch optischen Reiz elektrisch veränderbare Systeme.

Die Lichtdetektoren 2 werden von einer Auswerteschaltung 3 gespeist, die auch die von den Lichtdetektoren 2 abgegebenen Helligkeissignale auswertet. In der Auswerteschaltung 3 werden die Helligkeitssignale mit einer Heiligkeitsschwelle verglichen. In Abhängigkeit von dem Ergebnis des Vergleiches, d. h. bei Unter- oder Überschreiten der vorgegebenen Helligkeitsschwelle. wird ein entsprechendes Steuersignal an eine Steuereinrichtung 4 der Bodenverdichtungsvorrichtung gegeben. Dieses Steuersignal entspricht z. B. dem Signal, das beim Festhalten eines konventionellen Sicherheitsbügels erzeugt wird.

Stellt z. B. die Auswerteschaltung 3 fest, daß die Mehrheit der Lichtdetektoren 2 eine nur geringe Helligkeit erkennt, wird daraus geschlossen, daß die Lichtdetektoren 2 durch die Hände des Bedieners abgedeckt und daher abgedunkelt sind. Daraus wird auch geschlossen, daß sich die Hände des Bedieners am Führungsbügel 1 befinden.

Die Lichtdetektoren 2 müssen möglichst zuverlässig feststellen, daß die Hand des Bedieners tatsächlich am Führungsbügel anliegt oder ihn umgreift. Dazu ist es zweckmäßig die Lichtdetektoren 2 an der Ober- und Unterseite des Führungsbügels 1 anzuordnen, so daß sie sowohl vom Handballen als auch von den Fingern der Hand des Bedieners abgedeckt werden müssen. Ein einfaches Handanlegen genügt dann nicht mehr, um den gewünschten Steuerimpuls auszulösen. Selbstverständlich sind auch andere Anordnungen der Lichtdetektoren 2 möglich, die sich aufgrund von ergonomischen oder Sicherheitsanforderungen ergeben.

Die Auswerteschaltung 3 gibt daraufhin ein Signal an die Steuereinrichtung 4, daß die Bodenverdichtungsvorrichtung in Betrieb genommen werden darf.

Die Helligkeitsschwelle in der Auswerteschaltung 3 kann fest eingespeichert sein. Aufgrund der unterschiedlichen Umgebungsbedingungen, in denen die Maschine zum Einsatz kommen kann, ist es jedoch zweckmäßig, die Hellig-keitsschwelle in Abhängigkeit von der Umgebungshelligkeit variabel einzustellen. Dazu ist ein zusätzlicher Umgebungslichtdetektor 5 mit der Auswerteschaltung gekoppelt, der nicht von der Hand des Bedieners übergriffen werden soll. Der Umgebungslichtdetektor 5 kann z. B. an der Oberseite der Bodenverdichtungsvorrichtung angebracht sein. Je nach Umgebungshelligkeit, d. h. abhängig von Sonnenschein und Dämmerung, liefert der Umgebungslichtdetektor 5 ein Grundsignal, auf dessen Basis die Auswerteschaltung 3 die Helligkeitsschwelle für die restlichen Lichtdetektoren 2 festlegt.

Der Umgebungslichtdetektor 5 hat den weiteren Vorteil, daß durch ihn auch eine Verschmutzung der anderen Lichtdetektoren 2 erkannt werden kann. Wenn nämlich schon im Ausgangszustand die Lichtdetektoren 2 eine niedrigere Helligkeit anzeigen als der Umgebungslichtdetektor 5, oder wenn sämtliche Lichtdetektoren 2, 5 unabhängig davon, ob die Hand am Führungsbügel 1 anliegt oder nicht, stets ähnliche Helligkeitswerte detektieren, erkennt die Auswerteschaltung, daß zumindest ein Teil der Detektoren 2, 5 verschmutzt sein muß.

Eine Beeinträchtigung der Funktion durch Verschmutzung ist im übrigen eher unwahrscheinlich, da die Lichtdetektoren 2 im Betrieb der Arbeitsmaschine von der Hand umgriffen werden, wodurch Staub oder Schlammreste abgerieben werden.

## Patentansprüche

1. Bodenverdichtungs vorrichtung, mit einem Führungsbügel (1), in dem wenigstens ein im Griffbereich der Hand vorgesehener und ein der Helligkeit entsprechendes Signal (Helligkeitssignal) abgebender Lichtdetektor (2) vorgesehen ist. wobei der Lichtdetektor (2) mit einer Auswerteschaltung (3) gekoppelt ist, in der das Helligkeitssignal derart auswertbar ist, dass bei Unter- oder Überschreiten einer vorgegebenen Helligkeitsschwelle ein Steuersignal an eine Steuereinrichtung (4) der Bodenverdichtungsvorrichtung abgegeben wird, und die Helligkeitsschwelle von der Auswerteschaltung (3) in Abhängigkeit von der Umgebungshelligkeit variabel einstellbar ist, wobei zum Bestimmen der Umgebungshelligkeit ein mit der Auswerteschaltung (3) gekoppelter Umgebungslichtdetektor (5) außerhalb des Griffbereiches der Hand vorgesehen ist.

2. Bodenverdichtungsvorrichtung nach Anspruch 1, **dadurch gekennzeichnet, dass** dem Lichtdetektor (2) an dem Führungsbügel (1) kein lichtabgebendes Element zugeordnet ist.

3. Bodenverdichtungsvorrichtung nach Anspruch 1 oder 2, **dadurch gekennzeichnet, dass** der Lichtdetektor (2) eine Photodiode, einen Phototransistor oder einen lichtempfindlichen Widerstand (LDR. Light-Dependent-Resistor) umfasst.

4. Bodenverdichtungsvorrichtung nach einem der Ansprüche 1 bis 3. **dadurch gekennzeichnet; dass** an dem Führungsbügel (1) mehrere' Lichtdetektoren (2) an wenigstens zwei im Griffbereich beider Hände liegenden Stellen vorgesehen sind.

## Claims

1. Ground compacting device having a guide bracket (1) in which there is provided at least one light detector (2) which is provided in the gripping region for the hand and emits a signal corresponding to the brightness (brightness signal), wherein the light detector (2) is coupled to an evaluation circuit (3) in which the brightness signal can be evaluated such that when the brightness falls below or exceeds a predetermined brightness threshold a control signal is emitted to a control unit (4) of the ground compacting device and the brightness threshold can be adjusted in a variable manner by the evaluation circuit (3) in dependence upon the surrounding brightness, wherein in order to determine the surrounding brightness a surrounding light detector (5) coupled to the evaluation circuit (3) is provided outside of the gripping region for the hand.

2. Ground compacting device as claimed in Claim 1, **characterised in that** a light-emitting element is not allocated to the light detector (2) on the guide bracket (1).

3. Ground compacting device as claimed in Claim 1 or 2, **characterised in that** the light detector (2) comprises a photodiode, a phototransistor or a light-dependent resistor (LDR).

4. Ground compacting device as claimed in any one of Claims 1 to 3, **characterised in that** the guide bracket (1) is provided with several light detectors (2) at at least two positions located in the gripping region for both hands.

## Revendications

1. Dispositif de compactage du sol, comportant un arceau de guidage (1), dans lequel est prévu au moins un détecteur optique (2), disposé dans la zone de préhension pour la main et émettant un signal correspondant à la luminosité (signal de luminosité), le détecteur optique (2) étant couplé à un composant d'analyse (3), dans lequel le signal de luminosité est analysé de telle sorte que, lorsque celui-ci est supérieur ou inférieur à un seuil de luminosité prédéfini, un signal de commande est émis vers un dispositif de commande (4) du dispositif de compactage du sol, et le seuil de luminosité peut être réglé de manière variable par le composant d'analyse (3) en fonction de la luminosité environnante, sachant que pour déterminer la luminosité environnante, il est prévu en dehors de la zone de préhension pour la main un détecteur de lumière ambiante (5) couplé au composant d'analyse (3).

2. Dispositif de compactage du sol selon la revendication 1, **caractérisé en ce qu'**aucun élément émettant de la lumière n'est associé au détecteur optique (2) sur l'arceau de guidage (1).

3. Dispositif de compactage du sol selon la revendication 1 ou 2, **caractérisé en ce que** le détecteur optique (2) comporte une photodiode, un phototransistor ou une résistance sensible à la lumière (résistance LDR ou light dependent resistor).

4. Dispositif de compactage du sol selon l'une quelconque des revendications 1 à 3, **caractérisé en ce que** plusieurs détecteurs optiques (2) sont prévus sur l'arceau de guidage (1) dans au moins deux emplacements situés dans la zone de préhension pour les deux mains.
